(19) Europäisches Patentamt
European Patent Office
Office européen des brevets

(11) Veröffentlichungsnummer: **0 233 599**
**B1**

(12) # EUROPÄISCHE PATENTSCHRIFT

(45) Veröffentlichungstag der Patentschrift: **24.10.90**

(51) Int. Cl.⁵: **C08F 36/18**

(21) Anmeldenummer: **87101976.6**

(22) Anmeldetag: **12.02.87**

(54) **Chloropren-Polymerisation.**

(30) Priorität: **19.02.86 DE 3605334**

(43) Veröffentlichungstag der Anmeldung: **26.08.87 Patentblatt 87/35**

(45) Bekanntmachung des Hinweises auf die Patenterteilung: **24.10.90 Patentblatt 90/43**

(84) Benannte Vertragsstaaten: **DE FR GB**

(56) Entgegenhaltungen:
**EP-A- 0 034 747**
**FR-A- 1 338 716**
**FR-A- 2 073 106**

(73) Patentinhaber: **BAYER AG, D-5090 Leverkusen 1 Bayerwerk(DE)**

(72) Erfinder: **Musch, Rüdiger, Dr., Altenberger-Dom-Strasse 169, D-5060 Bergisch Gladbach 2(DE)**
Erfinder: **Müller, Eberhard, Dr., Pfauenstrasse 19, D-4047 Dormagen 1(DE)**
Erfinder: **Wendling, Peter, Franz-Marc-Strasse 9, D-5090 Leverkusen 1(DE)**
Erfinder: **Konter, Wolfgang, Dr., Espenstrasse 49, D-4040 Neuss 21(DE)**
Erfinder: **Hohmann, Gerhard, Dr., An der Steinrütsch 35, D-5090 Leverkusen 1(DE)**

**EP 0 233 599 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur Herstellung von Chloroprenpolymerisaten mit Hilfe eines Polymerisationsinitiators enthaltend Natriumdithionit, wobei man einen Teil des Initiators bei Polymerisationsbeginn zusetzt und den übrigen Teil in einem oder mehreren Anteilen während der Polymerisation eindosiert, und in Gegenwart eines Kettenübertragungsmittels, wobei man einen Teil zu Beginn der Reaktion vorlegt und die restliche Menge in einem oder mehreren Anteilen zudosiert.

Es ist üblich, 2-Chlorbutadien (= Chloropren) durch Zusatz von Stabilisatoren, wie Phenothiazin, gegen unkontrollierte und vorzeitige Polymerisation zu schützen und diese Stabilisatoren während der Polymerisation im Monomeren zu belassen, weil dadurch die Notwendigkeit entfällt, das unstabilisierte Chloropren tiefgekühlt aufzubewahren und streng vor Luftzutritt zu schützen.

Dem Fachmann ist nun bekannt, daß die radikalisch initiierte Emulsionspolymerisation von Chloropren in Anwesenheit von Stabilisatoren und/oder Sauerstoffspuren entweder gar nicht oder nur sehr verzögert gestartet werden kann.

Zudem haben bereits relativ geringe, technisch unvermeidbare Schwankungen des Stabilisatorgehaltes im Monomeren relative große Schwankungen des Starts und einen ungleichmäßigen Verlauf der Polymerisation und damit eine Verschlechterung der Produktqualität zur Folge.

In der EP-A 34 747 wird für diesen Fall ein Verfahren zur Polymerisation von Chloropren mit Initiatorsystemen auf Basis Natriumdithionit beschrieben. Bei diesem Verfahren kann jedoch gerade bei kontinuierlicher Polymerisationsweise kein willkürliches Monomerumwandlungsverhältnis in den einzelnen Kesseln eingestellt werden, da der Katalysator in einem einzigen Anteil zu Reaktionsbeginn zugesetzt wird.

Durch die Wahl des Initiator-Verhältnisses Peroxid/Dithionit ist außerdem ein vollständiger Verbrauch des Peroxidinitiators nicht zwingend gewährleistet. Wie dem Fachmann bekannt ist, beeinflussen aber gerade solche überschüssigen Peroxidmengen die Produkteigenschaften des fertigen Polymers negativ.

Gerade bei einer kontinuierlichen Polymerisationsanlage machen sich solche Effekte besonders negativ bemerkbar und führen zu starken Umsatzschwankungen in der Kesselkaskade.

Hohe Initiatordosierungen und Umsatzüberschreitungen bedingen z.B. eine stärkere Verzweigung bzw. Vernetzung des Polymerisates, was wiederum zu einer Verschlechterung der Produktqualität führt.

Um trotzdem gelfreie Polymerisate zu erhalten, besteht die Möglichkeit, das Kettenübertragungsmittel wie z.B. n-Dodecylmercaptan (n-DDM) teilweise zu Polymerisationsbeginn und während der Polymerisation gestaffelt zuzugeben.

Um auf Grund dieser Maßnahme gelfreie Produkte im erwünschten Viskositätsbereich zu erhalten, ist eine exakte Dosierung des Kettenübertragungsmittels innerhalb bestimmter Monomerumsatzbereiche nötig. Dies ist wegen der beschriebenen Umsatzschwankungen besonders bei kontinuierlicher Fahrweise nicht möglich.

Der Erfindung liegt daher die Aufgabe zugrunde, ein Verfahren zur Polymerisation von Chloropren aufzufinden, das es ermöglicht, reproduzierbar gelfreies Polychloropren auch bei hohen Monomerumsätzen herzustellen.

Gegenstand der Erfindung ist daher ein kontinuierliches Verfahren zur Herstellung von Chloroprenpolymerisaten durch wäßrige Emulsionspolymerisation von mit Phenothiazinverbindungen stabilisiertem Chloropren oder einem Gemisch aus Chloropren und bis zu 20 Gew.-% mindestens eines oder mehrerer mit Chloropren copolymerisierbarer Monomerer unter Verwendung eines Polymerisationsinitiators, bestehend aus einer Mischung von Natriumdithionit mit Formamidinsulfinsäure oder mit Kaliumperoxodisulfat oder mit Formamidinsulfinsäure und Kaliumperoxodisulfat oder mit Kaliumperoxodisulfat und Natriumanthrachinon-β-sulfonat oder mit Formamidinsulfinsäure und Kaliumperoxodisulfat und Natriumanthrachinon-#-sulfonat in Gegenwart von Sauerstoff und eines Kettenübertragungsmittels, wobei 20 bis 80 Gew.-% bevorzugt 35 bis 45 Gew.-% der Gesamtmenge an Kettenübertragungsmittel vor oder zu Beginn der Polymerisation vorgelegt und bei Monomerumsätzen über 20% bevorzugt über 40%, die restliche Menge in einem oder mehreren Teilen zudosiert wird, dadurch gekennzeichnet, daß zu Polymerisationsbeginn 30 bis 90% der Initiatoren vorliegen und der Rest während der Polymerisation portionsweise zugegeben wird, wobei bei einem Umsatz > 60% nur noch Natriumdithionit zugesetzt wird.

Die FR-A 1 338 716 betrifft ein Verfahren zur Polymerisation von Chloropren in Abwesenheit von Sauerstoff und in Gegenwart von

a) organischem Hydroperoxid,
b) anorganischem wasserlöslichem Persulfat und
c) anorganischem wasserlöslichem Hydrosulfit und/oder Pyrosulfit (= Dithionit),

wobei a) und b) dem System vor Einleitung der Polymerisation zugesetzt werden und die Polymerisation dann durch Zugabe von c) eingeleitet und aufrechterhalten wird. Es wird nur ein diskontinuierliches Verfahren beschrieben. Regler kann, falls gewünscht, zusammen mit dem Persulfat - also vor Reaktionsbeginn - zugegeben werden. Phenothiazin wird, wenn überhaupt, zum Abbrechen der Polymerisation verwendet; vgl. Beispiele. Die FR-A 1 338 716 konnte als das erfindungsgemäße Verfahren nicht nahelegen.

Bezogen auf die zu polymerisierenden Monomeren werden für das erfindungsgemäße Verfahren 0,01 bis 0,3, bevorzugt 0,01 bis 0,15 Gew.-% Natriumdithionit eingesetzt.

Das Gewichtsverhältnis der üblichen Initiatoren zu Natriumdithionit beläuft sich auf 0,05 - 5:1, bevorzugt 0,1 3:1.

Werden als übliche Initiatoren eine Mischung von FAS und Kaliumperoxodisulfat verwendet, so beträgt deren Gewichtsverhältnis zueinander 1:10 - 10:1. Gelangt eine Mischung aus Kaliumperoxodisulfat und Anthrachinon-β-sulfonsaures Natrium zum Einsatz, so können diese Komponenten in dem Gewichtsverhältnis, wie es der US-A 2 426 854 entnommen werden kann, eingesetzt werden. Das Gewichtsverhältnis von FAS/Kaliumperoxodisulfat und Anthrachinon-β-sulfonsaures Natrium kann im Rahmen der Angaben in der DE-A 2 650 342 variiert werden.

Initiatoren aus Natriumdithionit und Kaliumperoxodisulfat sind bevorzugt, wobei das Molverhältnis des Dithionits zum Persulfat insbesondere bei 1-3:1, bevorzugt bei 1-2:1, liegt.

Als Emulgatoren können die bekannten anionischen, kationischen, nichtionischen und amphoteren oberflächenaktiven Verbindungen eingesetzt werden. Die Emulgatoren werden für sich allein oder kombiniert in solchen Mengen eingesetzt, die eine oberflächenaktive Wirkung gewährleisten. Die Mengen schwanken je nach Art der verwendeten Verbindungen und dem pH-Bereich größenordnungsgemäß zwischen 2 und 6 Gew.-%., bezogen auf die eingesetzte Monomermenge. Die Polymerisation wird bei 0 bis 70°C durchgeführt, wobei 0 - 55°C bevorzugt sind.

Die Monomeren werden üblicherweise je nach vorgesehener Anwendung des Polymeren zu 63 bis 85 % umgesetzt, wobei für Festkautschuke zur Erzielung vorteilhafter anwendungstechnischer Werte Umsätze zwischen 63 und 70 % angemessen sind.

Geeignete Comonomere sind z. B. Acrylnitril, Methacrylnitril, Acrylsäureester, Methacrylsäureester, Vinylidenchlorid, Styrol, Vinyltoluole, Butadien-(1,3), 1-Chlorbutadien-(1,3), 2,3-Dichlorbutadien-(1,3), 2-Chlor-3-Methylbutadien-(1,3) und Schwefel, wobei Schwefel und 2,3-Dichlorobutadien-(1,3) bevorzugt sind.

Der bevorzugte Bereich liegt für die Nachdosierung des Kettenübertragungsmittels bei 42-60 % Monomerumsatz.

Die Gesamtmenge an Regler liegt vorzugsweise bei 0,3 bis 5 mmol je 100 g Monomer.

Bevorzugte Kettenübertragungsmittel sind aliphatische Mercaptane, insbesondere solche mit 8 bis 18 Kohlenstoffatomen. Die Mercaptane können geradekettig oder verzweigt sein. So können primäre, sekundäre und tertiäre Mercaptane verwendet werden, das bevorzugteste Mercaptan ist jedoch n-Dodecylmercaptan. Auch andere bekannte Kettenübertragungsmittel, beispielsweise aromatische Disulfide oder Xanthogendisulfide, insbesondere Xanthogendisulfide, wie sie in EP-A 53 319 beschrieben sind, können verwendet werden. Ein bevorzugtes Xanthogendisulfid ist Bis-(5-ethyl-1,3-dioxan-5-ylmethyl)-xanthogendisulfid.

Nicht umgesetzte organische Verbindungen lassen sich nach der Reaktion durch Wasserdampfdestillation, beispielsweise bei 50°C und einem absoluten Druck von 266,644 Pa entfernen.

Die in den folgenden Beispielen beschriebenen Polymerisationsversuche wurden zur Erzielung besonders definierter Reaktionsbedingungen in einer kontinuierlich betriebenen 6 Kessel-Kaskade betrieben.

Diese kontinuierliche Polymerisation von Chloropren ist aus den US-Patentschriften 2 384 277, 2 394 291 und 2 831 842 bekannt.

Das Monomere inclusive Stabilisator und Regler wurde in der Emulgator und Ätznatron enthaltenden wäßrigen Phase voremulgiert und gelangte dann in das Reaktionsgefäß, in das zusätzlich der Initiator eindosiert wurde. Analoge Ergebnisse der Polymerisation wurden auch dann erhalten, wenn ohne Voremulgierung gearbeitet wurde.

Nach dem Austritt aus der Rührkesselkaskade wurde die Reaktion durch Zugabe bekannter Abstoppmittel wie t-Butylbrenzcatechin bzw. Diethylhydroxylamin und gleichzeitigem Entzug des Monomeren abgebrochen. Der pH-Wert des alkalischen Latex wurde durch verdünnte Essigsäure auf pH 6,5 gesenkt und das Polymere aus dieser Emulsion durch Gefrierkoagulation isoliert und getrocknet (Chem. Engng. Progr. 43, 391 (1974), DE-C 1 051 506).

1. Vergleichsbeispiel

In den ersten Reaktor einer Polymerisationskaskade, bestehend aus 6 gleichen Reaktoren mit einem Volumen von je 50 Liter wurden die wäßrige Phase (W) und die Monomerphase (M) über eine Meß- und Regelapparatur in stets konstantem Verhältnis eingefahren. Die mittlere Verweilzeit je Kessel betrug 30 Minuten. Die Aktivatorphase A wurde im 2. Reaktor (1. Polymerisationskessel) zudosiert. Die Reaktion erfolgte in Gegenwart von Luft. Die Zahlenangaben sind Gew.-Teile pro Zeiteinheit. Die tatsächlichen Mengen ergeben sich aus der Rezeptur, den Dichten der einzelnen Phasen, dem Reaktorvolumen, der geflutet gefahren wurde, und der mittleren Verweilzeit.

(M) = Monomerphase:

Chloropren 100,0
n-Dodecylmercaptan 0,13
Phenothiazin 0,015

(W) = wäßrige Phase:

Entsalztes Wasser 140,0
Natriumsalz einer disproportionierten Abietinsäure 6,0
Natriumsalz eines Kondensationsproduktes aus Naphthalinsulfonsäure und Formaldehyd 0,7
Ätznatron 0,63

(A) = Aktivatorphase:

1 Gew.-% wäßrige Natrium-Dithionitlösung 0,068
Kaliumperoxodisulfat 0,072

Bei einer Innentemperatur von 11°C sprang die Reaktion im 1. Polymerisationskessel an. Durch eine Außenkühlung wurde die freiwerdende Polymerisationswärme abgeführt und die Polymerisationstemperatur auf 10°C erniedrigt. Entsprechend dem Zulauf in den ersten Kessel durchläuft das Reaktionsgemisch die Rührkesselkaskade. Bei einem Monomerumsatz von 74 % wurde die Reaktion durch Zugabe von Diethylhydroxylamin abgebrochen. Das restliche Monomere wurde durch Wasserdampfdestillation aus dem Polymeren entfernt und der Polymerlatex nach Senken des pH-Wertes auf 6,5 auf einer Kühlwalze ausgefroren und isoliert. Die Mooney-Viskosität ML-4 des Polymeren lag bei 103 ME.

2. Vergleichsbeispiel

Es wurde wie im 1. Vergleichsbeispiel polymerisiert, jedoch mit einer gestaffelten n-DDM-Regelung, um zum gewünschten Endumsatz von 70 % - 80 % zu gelangen. Es wurde daher in den 1. Polymerisationskessel 0,09 Gew.-% und im 2. Polymerisationskessel 0,12 Gew.-% n-DDM zudosiert. Bei einem Monomerumsatz von 72 % wurde die Polymerisation abgebrochen und aufgearbeitet. Man erhielt ein Polymer mit einer Viskosität von 118 ME.

Beispiel 1

Man verfuhr wie im 2. Vergleichsbeispiel, ersetzte jedoch Aktivierung und Regelung im 1. Polymerisationskessel durch eine gestaffelte Aktivierung und Regelung in allen 5 Polymerisationskesseln, wobei im letzten Reaktionsgefäß zur Aktivierung nur eine Na-Dithionitlösung eindosiert wurde. Die Verteilung der Aktivatorlösungen und der Reglermengen auf die Polymerisationskessel ist in Tabelle 1 zusammengestellt. Das Polymer hatte eine Viskosität ML-4 von 104 ME.

Beispiel 2

Man verfuhr wie im Beispiel 1, ersetzte jedoch den Regler n-Dodecylmercaptan durch die äquimolare Menge des Xanthogendisulfids der Formel

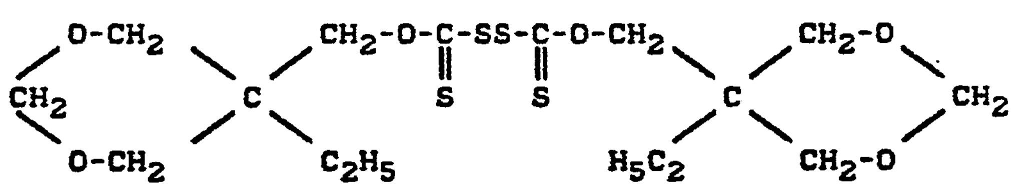

Das Polymere hat eine Viskosität ML-4 von 106 ME.

Wie man den Beispielen 1 und 2 entnehmen kann, erfolgt durch das erfindungsgemäße Verfahren eine deutlich gleichmäßigere Polymerisation in den Reaktionsgefäßen (vgl. Tab. 1).

Chloropren-Polymere, die so hergestellt worden sind, besitzen gegenüber den nach dem Stand der Technik hergestellten Produkten ein deutlich besseres Eigenschaftsniveau, das beispielhaft an der Lagerstabilität gezeigt werden soll.

**Tabelle 1:** Abhängigkeit des Monomerumsatzes von der Art der Aktivierung und der Regelung

| Poly-meri-sations-Kessel | 1. Vergleichsbeisp. Aktivator PS | Aktivator Na-D (Gew.%) | nDDM | Monomer-umsatz (%) | 2. Vergleichsbeisp. Aktivator PS | Aktivator Na-D (Gew.-%) | nDDM | Monomer-umsatz (%) | Beispiel 1 Aktivator PS | Aktivator Na-D (Gew.-%) | nDDM | Monomer-umsatz (%) | Beispiel 2 Aktivator PS | Aktivator Na-D (Gew.-%) | MTX | Monomer-umsatz (%) |
|---|---|---|---|---|---|---|---|---|---|---|---|---|---|---|---|---|
| 1 | 0,072 | 0,068 | 0,13 | 38 | 0,072 | 0,068 | 0,09 | 36 | 0,063 | 0,044 | 0,09 | 16 | 0,063 | 0,045 | 0,27 | 14 |
| 2 | - | - | - | 56 | - | - | 0,12 | 55 | 0,0037 | 0,003 | - | 37 | 0,004 | 0,003 | - | 31 |
| 3 | - | - | - | 67 | - | - | - | 64 | 0,0034 | 0,003 | 0,10 | 56 | 0,004 | 0,003 | 0,30 | 48 |
| 4 | - | - | - | 71 | - | - | - | 70 | 0,0003 | 0,001 | 0,02 | 64 | 0,002 | 0,003 | 0,06 | 58 |
| 5 | - | - | - | 74 | - | - | - | 72 | 0 | 0,019 | - | 72 | 0 | 0,019 | - | 69 |

PS = K-Peroxodisulfat

Na-D = Natriumdithionit

nDDM = n-Dodecylmercaptan

MTX =

Beispiel 3: Rheologisches Verhalten von Polychloroprenlösungen

Beim Lagern von Lösungen des unmastizierten Polychloropren tritt im Laufe der Zeit eine Änderung im Fließverhalten der Lösungen ein, die bis zu einer völligen Verschleimung der Lösungen führen kann.
Da die Änderung des Fließverhaltens bei Klebstoff-Lösungen zu einer erheblichen Beeinträchtigung der Verarbeitbarkeit führt (u. a. schlechtere Streichbarkeit, schlechterer Maschinenlauf, schlechtere Spritzbarkeit), ist es zur Herstellung hochwertiger Klebstoffe mit einer auch nach längerer Lagerzeit einwandfreien Verarbeitbarkeit auch nach längerer Lagerzeit erforderlich, Polychloropren vor dem Lösen unter erheblichem Kostenaufwand zu mastizieren.
Aus wirtschaftlichen Gründen ist es daher erwünscht, viskositätsstabile Klebstofflösungen auch ohne vorherige Mastikation zu erhalten.
Als Prüfverfahren hierfür eignet sich die Bestimmung der Normalspannungszahl (NZ).

A) Herstellung der Klebstofflösung

In einer 250 g Weithalsflasche mit Schraubverschluß wurden 33 g Polymer in 117 g eines Lösungsmittelgemisches, bestehend aus Ethylacetat/Benzin mit den Siedegrenzen 65/95°C und Toluol im Gewichtsverhältnis 2:2:1, unter Rühren gelöst. Dazu wurde das Polymere in Stücke von ~5 mm Durchmesser geschnitten. Das Lösen erfolgte unter Verschluß (durchbohrter Schraubdeckel) innerhalb von 16 h bei 300 upm.
Nach dem Lösen wurde durch weitere Zugabe des verwendeten Lösungsmittelgemisches bei 23°C mit dem Brookfield-Viskosimeter LVT eine Viskosität von 10 Pa's eingestellt. Bei den Messungen wurde DIN 53 019, Entwurf Januar 1979, zugrunde gelegt.

B) Messung der Normalspannungszahl NZ (cm)

In einer 250 g Weithalsflasche mit Schraubverschluß wurden 150 g des nach A) hergestellten Klebstoffs vorgelegt. In den Klebstoff tauchte ein Rührer, der auf seiner 7 mm starken Welle im Abstand von jeweils 1 cm Graduierungsringe trägt. An seinem unteren Ende befand sich ein Kegelstumpf mit einem Basisdurchmesser von 30 mm, einer Höhe von 11 mm und einem Winkel von 45°C. Dieser Rührer wurde bis zum oberen Ende des Kegelstumpfes (Nullmarke) in den Klebstoff getaucht und mit einer Geschwindigkeit von 300 upm bewegt. Je nach Grad der Viskoelastizität stieg hierbei der Klebstoff an der Rührwelle hoch und erreichte nach 30 sec seine maximale Steighöhe, die in (cm) als Normalspannungszahl NZ abgelesen wurde. (Tabelle 2)

**Tabelle 2**

| Polymer aus | Vergleichsbeispiel 1 | Vergleichsbeispiel 2 | Beispiel 1 | Beispiel 2 |
|---|---|---|---|---|
| NZ (cm) | | | | |
| sofort | 1,5 | 4,0 | 1,0 | 0,5 |
| 14 Tage | 1,5 | 5,0 | 1,0 | 0,5 |
| 1 Monat | 2,0 | 6,0 | 1,0 | 0,5 |
| 2 Monate | 3,0 | 8,0 | 1,0 | 0,5 |
| 3 Monate | 3,5 | 10,0 | 1,5 | 0,5 |
| 6 Monate | 6,5 | >16[1] | 1,5 | 0,5 |

1) nicht mehr meßbar

## Patentansprüche

1. Kontinuierliches Verfahren zur Herstellung von Chloroprenpolymerisaten durch wäßrige Emulsionspolymerisation von mit Phenothiazinverbindungen stabilisiertem Chloropren oder einem Gemisch aus Chloropren und bis zu 20 Gew.-% mindestens eines oder mehrerer mit Chloropren copolymerisierbarer Monomerer unter Vewendung eines Polymerisationsinitiators, bestehend aus einer Mischung von Natriumdithionit mit Formamidinsulfinsäure oder mit Kaliumperoxodisulfat oder mit Formamidinsulfinsäure und Kaliumperoxodisulfat oder mit Kaliumperoxodisulfat und Natriumanthrachinon-ßsulfonat oder mit Formamidinsulfinsäure und Kaliumperoxodisulfat und Natriumanthrachinon-ß-sulfonat in Gegenwart von Sauerstoff und eines Kettenübertragungsmittels, wobei 20 bis 80 Gew.-% der Gesamtmenge an Kettenübertragungsmittel vor oder zu Beginn der Polymerisation vorgelegt und bei Monomerumsätzen über 20% die restliche Menge in einem oder mehreren Teilen zudosiert wird, dadurch gekennzeichnet, daß zu Polymerisationsbeginn 30 bis 90% der Initiatoren vorliegen und der Rest während der Polymerisation portionsweise zugegeben wird, wobei bei einem Umsatz 60% nur noch Natriumdithionit zugesetzt wird.

2. Verfahren nach Anspruch 1, dadurch gekennzeichnet, daß auf die zu polymerisierenden Monomeren 0,01 bis 0,3 Gew.-% Natriumdithionit eingesetzt werden.

3. Verfahren nach Anspruch 1, dadurch gekennzeichnet, daß die Polymerisation bei 0 bis 70°C durchgeführt wird.

4. Verfahren nach Anspruch 3, dadurch gekennzeichnet, daß die Gesamtreglermenge 0,3 bis 5 mmol je 100 g Monomer beträgt.

5. Verfahren nach Anspruch 1, dadurch gekennzeichnet, daß als Comonomere 2,3-Dichlorbutadien und Schwefel verwendet werden.

6. Verfahren nach Anspruch 1, dadurch gekennzeichnet, daß man 35 bis 45 Gew.-% des Kettenübertragungsmittels vor oder zu Beginn derPolymerisation vorlegt.

7. Verfahren nach Anspruch 1, dadurch gekennzeichnet, daß man bei Monomerumsätzen über 40 % die restliche Menge an Kettenübertragungsmittel in einem oder mehreren Teilen zudosiert.

## Claims

1. Continuous process for the preparation of chloroprene polymers by aqueous emulsion polymerization of chloroprene stabilized with phenothiazine compounds or of a mixture of chloroprene and up to 20% by weight of at least one or more monomers which can be copolymerized with chloroprene, using a polymerization initiator comprising a mixture of sodium dithionite with formamidinesulphinic acid or with potassium peroxodisulphate or with formamidinesulphinic acid and potassium peroxodisulphate or with potassium peroxodisulphate and sodium anthraquinone-β-sulphonate or with formamidinesulphinic acid and potassium peroxodisulphate and sodium anthraquinone-β-sulphonate, in the presence of oxygen and a chain transfer agent, 20 to 80% by weight of the total amount of chain transfer agent being present before or at the commencement of polymerization and the remaining amount being added in one or more parts at monomer conversions above 20%, characterized in that 30 to 90% of the initiators are present at the commencement of polymerization and the remainder is added in portions during the polymerization, only the addition of continued sodium dithionite being at a conversion > 60%.

2. Process according to Claim 1, characterized in that 0.01 to 0.3% by weight of sodium dithionite is employed per monomers to be polymerized.

3. Process according to Claim 1, characterized in that the polymerization is carried out at 0 to 70°C.

4. Process according to Claim 3, characterized in that the total amount of regulator is 0.3 to 5 mmol per 100 g of monomer.

5. Process according to Claim 1, characterized in that 2,3-dichlorobutadiene and sulphur are used as comonomers.

6. Process according to Claim 1, characterized in that 35 to 45% by weight of the chain transfer agent is present before or at the commencement of the polymerization.

7. Process according to Claim 1, characterized in that the remaining amount of chain transfer agent is added in one or more portions at monomer conversions above 40%.

## Revendications

1. Procédé continu pour préparer des polymères de chloroprène par polymérisation en émulsion aqueuse du chloroprène ou d'un mélange de chloroprène et d'une proportion allant jusqu'à 20% en poids d'un ou plusieurs autres monomères copolymérisables avec le chloroprène, stabilisé par des dérivés de la phénothiazine, avec utilisation d'un inducteur de polymérisation consistant en un mélange de dithionite de sodium avec de l'acide formamidinesulfinique ou avec du peroxodisulfate de sodium ou avec de l'acide formamidine-sulfinique et du peroxodisulfate de potassium ou avec du peroxodisulfate de potassium et de l'anthraquinone-β-sulfonate de sodium ou avec de l'acide formamidine-sulfinique et du peroxodisulfate de potassium et de l'anthraquinone-β-sulfonate de sodium en présence d'oxygène et d'un agent de transfert des chaînes, avec introduction de 20 à 80% du poids total de l'agent de transfert des chaînes avant la polymérisation ou au début de la polymérisation et addition du restant en une ou plusieurs parties à des taux de conversion des monomères supérieurs à 20%, caractérisé en ce que l'on introduit de 30 à 90% des inducteurs en début de polymérisation et on ajoute le restant par portions en cours de polymérisation, mais, à un taux de conversion supérieur à 60%, on n'ajoute plus que du dithionite de sodium.

2. Procédé selon la revendication 1, caractérisé en ce que l'on utilise de 0,01 à 0,3% en poids de dithionite de sodium par rapport aux monomères à polymériser.

3. Procédé selon la revendication 1, caractérisé en ce que l'on effectue la polymérisation à des températures de 0 à 70°C.

4. Procédé selon la revendication 3, caractérisé en ce que la quantité totale de régulateurs représente de 0,3 à 5 mmol pour 100 g du monomère.

5. Procédé selon la revendication 1, caractérisé en ce que l'on utilise en tant que comonomères le 2,3-dichlorobutadiène et le soufre.

6. Procédé selon la revendication 1, caractérisé en ce que l'on introduit de 35 à 45% du poids de l'agent de transfert des chaînes avant la polymérisation ou en début de polymérisation.

7. Procédé selon la revendication 1, caractérisé en ce que l'on introduit le restant de l'agent de transfert des chaînes en une ou plusieurs parties lorsque le taux de conversion des monomères a dépassé 40%.